# EUROPEAN PATENT APPLICATION

(11) **EP 4 461 700 A2**
(43) Date of publication of application: **13.11.2024**
(21) Application number: 24174573.6
(22) Date of filing: 07.05.2024
(51) Int. Cl.: C01B 3/24, C10J 3/00

(54) **LOW CARBON INTENSITY HYDROGEN FROM METHANE**

(30) Priority: 09.05.2023 US 202363464998 P; 01.05.2024 US 202418652073
(71) Applicant: Air Products and Chemicals, Inc., Allentown, PA 18106 (US)
(72) Inventor: SHELAT, Maulik R, Macungie, 18062 (US); GHODASARA, Kamlesh, Borehamwood, WD6 1SB (GB); KATARIA, Atish Shanmukhkumar, Macungie, 18062 (US); JOUNY, Matthew A, Macungie, 18062 (US); AMY, Fabrice, Macungie, 18062 (US)
(74) Representative: Beck Greener LLP

(57) **Abstract**

A method for pyrolysing a methane-rich stream to produce hydrogen and a solid carbon intermediate. The solid carbon intermediate may then be transported to a second location to be gasified to produce hydrogen and carbon dioxide, the latter of which may be sequestered at the second location. Because the solid carbon intermediate may be transported more easily than carbon dioxide, this allows the decoupling of hydrogen production from carbon dioxide sequestration.

## Description

Existing industrial processes such as reforming hydrocarbon feeds to produce hydrogen (H₂) will need to reduce carbon dioxide (CO₂) emissions to mitigate the effects of climate change. The carbon dioxide produced per unit of hydrogen produced is the carbon intensity (CI) of a hydrogen process. Steam methane reforming, autothermal reforming, and partial oxidation can be coupled with carbon capture to produce low Cl hydrogen, but can be constrained by the requirement of matching a nearby customer for the hydrogen with a nearby sink for the captured carbon dioxide. Pyrolysis, or cracking, of methane (CH₄) by contrast converts much of the carbon to a high-value solid co-product such as carbon black, graphite, or graphene. Some fraction of the methane may be combusted to provide energy to drive the pyrolysis reaction, resulting in carbon dioxide emissions. Energy to drive the cracking reaction may come from heat or electricity generated from renewable sources to further reduce the Cl of the process.

Disclosed herein is a method for pyrolyzing methane to form hydrogen and a solid carbon intermediate at a first location, transporting the solid carbon intermediate to a second location, gasifying the solid carbon intermediate at the second location to form hydrogen and a carbon dioxide-rich stream, and sequestering at least a portion of the carbon dioxide-rich stream.

Disclosed herein is a system for pyrolyzing methane to form hydrogen and a solid carbon intermediate at a first location, a transportation means configured to deliver the solid carbon intermediate to a second location, a gasifier configured to accept the solid carbon intermediate and an oxygen stream to produce a second hydrogen stream and a carbon dioxide-rich stream, and a carbon dioxide sequestration site configured to accept at least a portion of the carbon dioxide-rich stream.

The term "transport" may be defined herein as movement of solid materials by one or more methods for shipping or transferring containers (i.e., containerized transport), for example by road (e.g., by means such as truck), by rail (e.g., by means such as a train) and/or by water (e.g., by means such as barge). The terms "transporting" and "transportation means" shall be interpreted accordingly.

The present invention will hereinafter be described in conjunction with the appended figures wherein like numerals denote like elements:
Fig. 1 is a schematic view depicting an embodiment of a methane pyrolysis process integrated with a solid carbon gasification process according to one or more aspects of the present disclosure.
Fig. 2 is a schematic view depicting a modification of Fig. 1 in which a plurality of pyrolyzers are integrated with a plurality of gasifiers.

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. Various changes may be made in the function and arrangement of elements without departing from the spirit and scope of the invention, as set forth in the appended claims.

The articles "a" or "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The phrase "at least a portion" means "a portion or all." The "at least a portion of a stream" has the same composition, with the same concentration of each of the species, as the stream from which it is derived.

The term "and/or" placed between a first entity and a second entity includes any of the meanings of (1) only the first entity, (2) only the second entity, or (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B but not C, (5) A and C but not B, (6) B and C but not A, and (7) A and B and C. The adjective "any" means one, some, or all, indiscriminately of quantity.

"Downstream" and "upstream" refer to the intended flow direction of the process fluid transferred. If the intended flow direction of the process fluid is from the first device to the second device, the second device is downstream of the first device. In case of a recycle stream, downstream and upstream refer to the first pass of the process fluid.

Methane may be pyrolyzed by catalytic processes such as fluidized bed reactors which require lower operating temperatures but are hindered by the challenge of handling the solid carbon product. A fluidized bed reactor may flow methane up through a bed of solid catalyst particles which in at least some embodiments comprise iron, nickel, and/or carbon. The methane may be pyrolyzed to produce H₂ and solid carbon; the catalyst may be reduced and may be separated from the solid carbon and regenerated to reuse. The fluidized bed reactor may be heated to drive the endothermic cracking reaction. A molten salt reactor may be similarly heated to keep the salt in a liquid state, typically ranging from 900°C to 1100°C (1652°F to 2012°F). Methane may be bubbled up through the molten salt and pyrolyzes to form hydrogen gas and solid carbon which may be removed from the top of the reactor. Some molten salt may be lost with the solid carbon and must be replaced over time.

Non-catalytic processes may be easier to operate in terms of handling the solid carbon, but may require higher operating temperatures. A thermal process may operate at a temperature ranging from 800°C to 1800°C (1472°F to 3272°F), 900°C to 1700°C (1652°F to 3092°F), 1000°C to 1600°C (1832°F to 2912°F) or from 1100°C to 1500°C (2012°F to 2732°F), injecting methane into the reactor. Alternatively, the temperature may be up to about 1800°C (3272°F), up to about 1700°C (3092°F), up to about 1600°C (2912°F), or up to about 1500°C (2732°F). In a moving bed process, carbon particles may flow countercurrently to the methane. The carbon particles may be heated inductively. The methane may pyrolyze to form hydrogen and solid carbon on the surface of the particles. The reactor walls may also provide a surface for cracking the methane, which deposits carbon onto the reactor walls. Some reactors may inject oxygen to burn the deposited carbon and provide heat to drive the pyrolysis reactions. Plasma processes may be the most technologically mature, but they may require significant power input to produce the high temperature plasma, e.g., greater than about 2000°C (or 3632°F), through which methane may flow and pyrolyze.

Typical methane pyrolyzers are optimized to maximize the yield of the highest value solid carbon product such as carbon nanotubes. Counter-intuitively, it may be more advantageous to not only optimize a methane pyrolyzer to maximize the yield of hydrogen, but to convert the higher-value solid carbon to lower-value syngas or hydrogen if it reduces the constraints on the sequestration of carbon dioxide. Furthermore, the Cl of hydrogen produced in the solid carbon gasifier may be higher than the Cl of hydrogen produced in the methane pyrolyzer. The benefit of decoupling the location of hydrogen consumers from carbon dioxide sequestration sites justifies increasing the overall Cl of the hydrogen. The overall CI of the pyrolyzer-gasifier process of around 1.6-2.2 kg CO₂/kg H₂ (kilograms of carbon dioxide per kilogram of hydrogen) is similar to the overall CI of conventional hydrogen generation with carbon capture technologies such as steam methane reforming, autothermal reforming, and partial oxidation of around 1.6-1.8 kg CO₂/kg H₂. As an integrated system, the upstream emissions for methane production and distribution could be assigned between the hydrogen at the methane pyrolyzer and the hydrogen at the solid carbon gasifier to optimize to meet regulatory requirements. At large scales, the cost of gasifying the solid carbon may be reduced as the market for hydrogen may be much larger than that of solid carbon on a mass basis.

The energy required to drive the pyrolysis reaction may come at least in part from renewable energy sources such as solar photovoltaics, solar thermal, wind power, hydro, and renewable methane. Most renewable energy sources are inherently intermittent in nature. The problem of fluctuations in availability may be addressed in the present disclosure by providing a system for collecting and storing at least some, preferably all, of the excess hydrogen gas produced during periods when production exceeds demand from one or more downstream process(es), and distributing stored hydrogen gas to the downstream process(es) during periods when the demand exceeds production.

In some embodiments, the compressed hydrogen may be stored without further compression. In these embodiments, the gas may be stored at a pressure up to a maximum pressure of the pressure to which the hydrogen may be compressed in a multistage compression system, e.g., a pressure up to a maximum of about the feed pressure of the downstream process (where there is only one) or about the feed of one of the downstream processes (if there are more than one).

The compressed hydrogen may however be further compressed prior to storage. In these embodiments, compressed hydrogen gas may be stored at a pressure ranging from 20 bar (2 MPa or 290 psi) to about 200 bar (20 MPa or 2900 psi), or up to a maximum of about 200 bar (20 MPa or 2900 psi), or up to a maximum of about 150 bar (15 MPa or 2175 psi), or up to a maximum of about 100 bar (10 MPa or 1450 psi), or up to a maximum of about 90 bar (9 MPa or 1305 psi), or up to a maximum of about 80 bar (8 MPa or 1160 psi), or up to a maximum of about 70 bar (7 MPa or 1015 psi), or up to a maximum of about 60 bar (6 MPa or 870 psi), or up to a maximum of about 50 bar (5 MPa or 725 psi).

During periods when the level of demand for hydrogen exceeds the production level, compressed hydrogen gas may be removed from storage and reduced in pressure to produce reduced pressure hydrogen gas. Pressure may be reduced in any conventional manner, particularly by passing the gas through a valve. The pressure of the reduced pressure hydrogen gas will depend on the pressure at the point in the multistage compression system to which the reduced pressure hydrogen gas is to be added.

As will be readily appreciated, a "multistage" compression system has a plurality of stages of compression that may be split between compressors in parallel and/or in series. The overall pressure ratio across each stage may be generally in the range of about 1.5 to about 3.5, or about 1.75 to about 3, or about 2 to about 2.5 in order to limit the increase in temperature of the compressed gas. The compressors in the multistage compression system are usually reciprocating compressors, however centrifigual compressors may be used instead of some or all of the reciprocating compressors.

Coolers are typically required between adjacent stages ("inter-coolers") and typically required after a final stage ("after-coolers") in multistage compression systems to remove heat of compression from the compressed gas. Thus, in the context of the present invention, a "stage" of compression refers to the part of the compression system between coolers. The multistage compression system comprises one or more compression sections. A "section" of compression in this context refers the part of the compression system between feeds and products. Each section may comprise one or more stages of compression, together with the associated coolers

In some embodiments, reduced pressure hydrogen gas may be fed to the final stage of the multistage compression system. In these embodiments, the reduced pressure hydrogen gas will be at the inlet pressure of the feed to the final stage. In other embodiments, reduced pressure hydrogen gas may be fed to an intermediate stage of the multistage compression system. In these embodiments, the reduced pressure hydrogen gas will be at the inlet pressure of the feed to the intermediate stage. The intermediate stage may be an intermediate stage within a compression section or, where there are two or more sections in the multistage compression system, the initial stage within a further compression section downstream of a first compression section. In these embodiments, the reduced pressure hydrogen gas will be at the inlet pressure of the feed to the further compression section, *i.e.*, the "inter-section" pressure. In still further embodiments, the reduced pressure hydrogen gas may be fed to the feed end, *i.e.*, to the initial stage, of the multistage compression system. In these embodiments, the reduced pressure hydrogen gas will be at the feed pressure to the multistage compression system, e.g., in a range from about 1 bar to about 2 bar (0.1 MPa to 0.2 MPa or 14 psi to 29 psi).

During periods when demand exceeds production, the method may comprise reducing the pressure of the compressed hydrogen gas withdrawn from storage to produce reduced pressure hydrogen gas at the inlet pressure to a first stage of the multistage compression system (a first intermediate pressure); and feeding the reduced pressure hydrogen gas to the first stage. In such embodiments, once the pressure of the compressed hydrogen gas in storage falls to about the inlet pressure of the first stage, the method may comprise reducing further the pressure of the compressed hydrogen gas withdrawn from storage to produce reduced pressure hydrogen gas at an inlet pressure to a second stage of the multistage compression system upstream of the first stage (a second intermediate pressure); and feeding the reduced pressure hydrogen gas to the second stage.

It will be understood that the terms "first stage" and "second stage" in this context do not refer to the relative positions of the stages in the multistage compression system in the downstream direction during normal operation. In contrast, the terms are merely intended to reflect the order of the stages to which reduced pressure hydrogen gas is fed to the multistage compression system during periods when demand exceeds production. The terms "first intermediate pressure" and "second intermediate pressure" should be Interpreted accordingly with the first intermediate pressure being higher than the second intermediate pressure.

These embodiments may further comprise feeding reduced pressure hydrogen gas to other stages of the multistage compression system upstream of the first and second stages. In these further embodiments, the pressure of the compressed hydrogen gas withdrawn from storage may be reduced to the inlet pressure to the respective stages. In some preferred embodiments, the second stage may be the initial stage of the multistage compression system.

For those with ordinary skill in the art, it may be appreciated that, in embodiments where reduced pressure hydrogen gas is fed to a second stage after the first stage, gas flow to the first stage may be stopped when gas flow to the second stage starts. Generally speaking, flow of reduced pressure hydrogen gas to a given compression stage may be stopped when flow of reduced pressure hydrogen gas to another compression stage starts.

Since hydrogen gas can be returned from storage to an intermediate stage and/or the initial stage of the multistage compression system, the compressed hydrogen gas may be stored at a pressure down to a minimum of about 5 bar (0.5 MPa or 73 psi), perhaps even down to a minimum of about 1.3 bar (0.13 MPa or 19 psi). In embodiments in which compressed hydrogen gas may be further compressed before being stored, another option would be for compressed hydrogen gas withdrawn from storage to be fed, after suitable pressure reduction, directly to the downstream process(es) until the storage pressure falls to the feed pressure of the downstream processes. At that point, the pressure of the compressed hydrogen gas withdrawn from storage would be reduced further and the reduced pressure hydrogen gas fed to a stage of the multistage compression system in accordance with the present invention. However, these embodiments are not preferred, e.g., because of the additional capital expense of the high-pressure storage system.

Compared to a high-pressure hydrogen storage system with discharge only to the feed pressure of a downstream process, the present invention enables the storage volume of hydrogen to be reduced by using the multistage compression system that may be already present in the process to recompress hydrogen from storage when the storage pressure drops below that feed pressure. The hydrogen can thereby continue to be taken from storage until the storage pressure falls to a minimum of the feed pressure to the multistage compression system.

Additional compression power may be required during periods when hydrogen production is limited by lack of power to the pyrolyzers, but the additional compression power can be minimised by supplying hydrogen at the highest compressor inter-stage pressure possible given the storage pressure at a particular time. It also allows the maximum hydrogen storage pressure to be at or below the feed pressure of the downstream process to eliminate any additional compression requirement for hydrogen to storage.

For one of ordinary skill in the art, it may be appreciated that the same volume of gas may be stored in the same storage volume at the same maximum pressure and that reducing the minimum storage pressure increases the "releasable" volume of gas from storage, i.e., the usable volume of stored gas.

Where hydrogen is produced and then compressed in a multistage compression system for use in at least one downstream process, the releasable volume of stored hydrogen may be increased by returning hydrogen from storage to a stage in the multistage compression system rather than directly to the downstream process, and that this arrangement reduces the overall storage vessel volume required by the process. For example, storage from a maximum pressure of 200 bar (20 MPa or 2900 psi) to a minimum pressure of 1.5 bar (0.15 MPa or 22 psi) requires 15% less storage vessel volume for a given mass of releasable hydrogen compared to storage from a maximum pressure of 200 bar (20 MPa or 2900 psi) to a minimum pressure of 30 bar (3 MPa or 435 psi). Similarly, storage from a maximum pressure of 100 bar (10 MPa or 1450 psi) to a minimum pressure of 1.5 bar (0.15 MPa or 22 psi) requires 30% less storage vessel volume for a given mass of releasable hydrogen compared to storage from a maximum pressure of 100 bar (10 MPa or 1450 psi) to a minimum pressure of 30 bar (3 MPa or 435 psi). In addition, storage from a maximum pressure of 50 bar (5 MPa or 725 psi) to a minimum pressure of 1.5 bar (0.15 MPa or 22 psi) requires 60% less storage vessel volume for a given mass of releasable hydrogen compared to storage from a maximum pressure of 50 bar (5 MPa or 725 psi) to a minimum pressure of 30 bar (3 MPa or 435 psi). Further, storage from a maximum pressure of 30 bar (3 MPa or 435 psi) to a minimum pressure of 1.5 bar (0.15 MPa or 22 psi) may be feasible compared to 30 bar (3 MPa or 435 psi) to 30 bar (3 MPa or 435 psi) which would allow no storage.

Moreover, although the total storage vessel volume increases as the maximum storage pressure is reduced, the lower design pressure makes the vessel walls thinner and can reduce the overall capital cost of the storage system. The vessel thickness may be often limited to a maximum value by considerations such as manufacturability, and in that case the lower design pressure will lead to fewer vessels (although each vessel will be larger). Furthermore, the allowable stress for the design of a vessel may be increased below a particular vessel wall thickness, and if the lower design pressure allows the thickness to be below this threshold, the total vessel metal mass (and therefore the total cost) can be reduced.

The storage system typically comprises a number of pressure vessels and/or pipe segments connected to a common inlet/outlet header. The pressure vessels may be spheres, *e.g.*, up to about 25 m (82 ft) in diameter, or "bullets", *i.e.*, horizontal vessels with large UD ratios (typically up to about 12:1) with diameters up to about 12 m (40 ft). Salt domes may also be used if the geology of the site allows.

A downstream processing unit may be any unit that utilizes hydrogen gas as a feedstock. Examples of suitable downstream processing units include an oil refinery, a steel manufacturing facility, an ammonia synthesis plant or a hydrogen liquefaction plant. In some embodiments, there may be both an ammonia synthesis plant and a hydrogen liquefaction plant arranged in parallel.

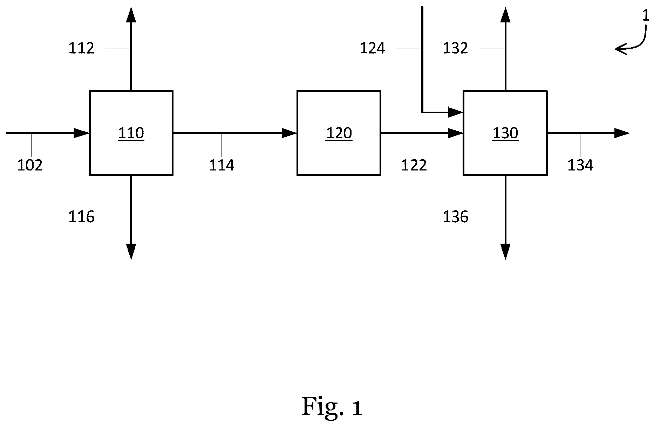

Fig. 1 is a schematic view depicting an embodiment of a methane pyrolysis process integrated with a solid carbon gasification process according to one or more aspects of the present disclosure. A methane-rich stream 102 may be derived from any suitable source such as natural gas, biogas, landfill gas. The methane-rich stream 102 enters a pyrolysis reactor system 110 that comprises a pyrolysis reactor that consumes energy to drive the endothermic pyrolysis reaction to convert the methane to form solid carbon intermediate and hydrogen according to the following reaction:

CH₄(g) → C(s) + 2 H₂(g) [1]

Pyrolysis of methane-rich gas produces hydrogen at a ratio ranging from 1.5 to 2.0 mol H₂/mol CH₄ (moles of hydrogen per mole of methane). In comparison, hydrogen can be produced from methane *via* steam methane reforming, autothermal reforming, or partial oxidation at a ratio ranging from 2.4 to 2.8 mol H₂/mol CH₄.

The pyrolysis reactor system 110 may also comprise a hydrogen purification unit (not shown) to remove impurities from the hydrogen and produce a hydrogen-rich stream 112 and a solid carbon intermediate 114. The solid carbon intermediate 114 may be converted into a more easily transported and stored form such as forming beads or pellets by mixing with water and a binding agent. Waste gases from the pyrolysis reactor system 110 exit as a pyrolysis flue gas stream 116 which may comprise carbon dioxide. In at least some embodiments, the pyrolysis reaction system 110 comprises a carbon dioxide capture unit (not shown) that separates carbon dioxide from the pyrolysis flue gas stream 116 for sequestration.

The solid carbon intermediate 114 may be separated to form high value products such as carbon black, carbon fibers, carbon nanotubes, or graphite. The solid carbon intermediate 114 may be used as a replacement for coal or coke in industrial applications, fuel for power generation, or used for soil enrichment. However, the solid carbon intermediate 114 may also be gasified by reacting with oxygen and/or steam to produce syngas similar to a coal gasification process according to the following overall reaction formulas:

C(s) + 2H₂O(g) → 4 H₂ (g) + CO₂(g) [2]

C(s) + O₂(g) → CO₂(g) [3]

C(s) + ½ O₂(g) →CO(g) [4]

CO(g) + H₂O(g) → H₂(g) + CO₂(g) [5]

The exothermic reactions 3 and 4 may be used to drive the endothermic reaction 2. Steam may be added after the partial oxidation of the solid carbon to generate hydrogen *via* the water gas shift reaction 5.

The solid carbon intermediate 114 may be transported to a storage site 120 at a different location than the pyrolyzer 110. In at least some embodiments the storage site may be located more than 100 miles (160 km), or more than 500 miles (800 km), from the pyrolyzer 110, necessitating transport, wherein transport may be defined herein as movement of any solid materials disclosed herein by means such as truck, train, barge, or any other method for shipping or transferring containers from a first location to at least a second location. In at least some embodiments, the storage site 120 may receive solid carbon intermediate from a plurality of methane pyrolyzers in a catchment area. A gasifier feed stream 122 may be delivered from the storage site 120 to a gasifier system 130 comprising a gasification reactor where the gasifier feed stream 122 may be reacted with an oxidant stream 124 comprising oxygen and steam to produce a syngas stream comprising hydrogen, carbon monoxide, and carbon dioxide. The gasifier system 130 may be at the same location as the storage site 120 or may be located more than 100 miles (160 km), or more than 500 miles (800 km), from the storage site 120, necessitating transport by means such truck, train, barge, or any other method for shipping or transferring containers from a first location to at least a second location. Other reactants may be required such as ash or other fluxant to generate slag to coat the walls and/or otherwise improve gasifier operation. This is in contrast to coal gasification in which ash is a component of the coal feed to be mitigated and removed from the gasifier. Without the addition of ash and/or other fluxant no slag would be generated; slag may be beneficial for gasifier operation to protect and/or insulate the gasifier walls. The gasifier system 130 may comprise one or more water gas shift reactors (not shown) to convert carbon monoxide and water to hydrogen and carbon dioxide in the syngas stream to produce a shifted syngas stream. The gasifier system 130 may comprise a hydrogen purification unit (not shown) to separate the shifted syngas stream to produce a hydrogen stream 132 and a carbon dioxide stream 134 for sequestration. The hydrogen purification unit may utilize any combination of pressure swing adsorption, vacuum swing adsorption, temperature swing adsorption, partial condensation, or distillation to produce the hydrogen product 132 and the carbon dioxide stream 134. Sequestration may include injection into an underground formation, delivery to a pipeline that brings the carbon dioxide stream 134 to an injection location, conversion into useful chemicals such as fuel, mineralization, and enhanced oil recovery. Waste gases from the gasifier system 130 exit as gasifier flue gas stream 136 which may comprise carbon dioxide. In at least some embodiments, the gasifier system 130 comprises a carbon dioxide capture unit (not shown) that separates carbon dioxide from the gasifier flue gas stream 136 for sequestration.

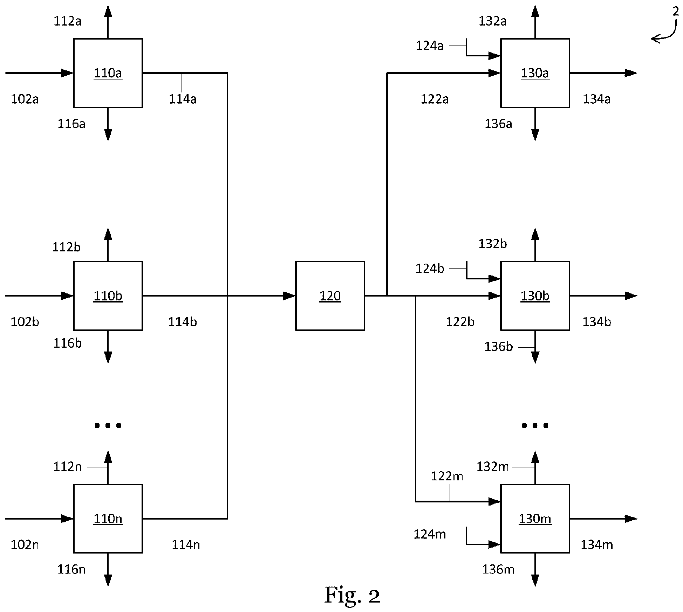

Considering the significant distance between pyrolyzer 110 and gasifier 130, the solid carbon may be more easily transported by vehicle at lower cost compared to a captured carbon dioxide stream that would require liquefaction or a pipeline. Solid carbon produced at a methane pyrolyzer can be transported to a solid carbon gasifier located near a carbon dioxide sink. The solid carbon may be processed for transport, such as pelletizing the solid carbon. Multiple methane pyrolyzers may supply a single solid carbon gasifier which allows aggregation of what would otherwise be multiple instances of carbon capture and sequestration equipment. Multiple methane pyrolyzers may supply a single solid carbon storage site which in turn may distribute solid carbon intermediate to multiple solid carbon gasifiers. Fig. 2 is a schematic view depicting a modification of Fig. 1 in which a plurality of pyrolyzers are integrated with a plurality of gasifiers. A number (N) of methane pyrolyzers feed a solid carbon storage site 120 which in turn distributes solid carbon intermediate to a number (M) of solid carbon gasifiers. Each of the N methane pyrolyzers and each of the M solid carbon gasifiers may be at different locations. The overall hydrogen yield of the combined process is around 2.6 mol H₂/mol CH₄, equal to the conventional low-Cl hydrogen processes with a more flexible sequestration of the carbon dioxide.
Aspect 1: A method for producing hydrogen gas comprising pyrolysing a methane-rich stream to produce a first hydrogen stream and a solid carbon intermediate at a first location; transporting the solid carbon intermediate to at least a second location; gasifying the solid carbon intermediate with oxygen to produce a second hydrogen stream and a carbon dioxide-rich stream at the at least second location; and sequestering at least a portion of the carbon dioxide-rich stream.
Aspect 2: A method according to Aspect 1, wherein the solid carbon intermediate is gasified with steam in addition to the oxygen.
Aspect 3: A method according to Aspect 1 or Aspect 2, wherein the solid carbon intermediate is transported from a plurality of pyrolyzers to the at least second location.
Aspect 4: A method according to any of Aspects 1 to 3, further comprising adding ash to the solid carbon intermediate prior to gasification with oxygen.
Aspect 5: A method according to any of Aspects 1 to 4, wherein the solid carbon intermediate is transported to a storage site prior to gasification at the second location.
Aspect 6: A method according to Aspect 5, wherein the storage site is located at an at least third location.
Aspect 7: A method according to Aspect 6, further comprising transporting the solid carbon intermediate from the storage site at the at least third location to a plurality of gasifiers.
Aspect 8: A method according to any of Aspects 1 to 7, further comprising compressing the first hydrogen stream in a multistage compression system to produce a compressed hydrogen gas; and feeding the compressed hydrogen gas to at least one downstream process; wherein at least a portion of the energy to pyrolyze the methane-rich stream is generated from at least one renewable energy source.
Aspect 9: A method according to Aspect 8, further comprising feeding excess compressed hydrogen gas to storage; withdrawing the excess compressed hydrogen gas from storage; reducing the pressure of the excess compressed hydrogen gas, and feeding the reduced pressure hydrogen gas to a first stage of the multistage compression system.
Aspect 10: A method according to Aspect 9, wherein the multistage compression system comprises a first section and at least one additional section downstream of the first section.
Aspect 11: A method according to Aspect 10, further comprising feeding the reduced pressure hydrogen gas to an intermediate stage of the multistage compression system.
Aspect 12: A method according to Aspect 11, further comprising feeding the reduced pressure hydrogen gas to the feed end of the multistage compression system.
Aspect 13: A method according to any of Aspects 9 to 12, further comprising feeding the reduced pressure hydrogen gas to a second stage of the multistage compression system; wherein the second stage of the multistage compression system is upstream of the first stage of the multistage compression system.
Aspect 14: A method for producing hydrogen comprising pyrolysing a methane-rich stream to produce a first hydrogen stream and a solid carbon intermediate at a first location; mixing the solid carbon with water and a binding agent to produce a converted solid carbon intermediate; transporting at least a portion of the converted solid carbon intermediate from the first location to a storage site; transporting the at least a portion of the converted solid carbon intermediate from the storage site to a second location; gasifying the converted solid carbon intermediate with oxygen, steam, and ash to produce a second hydrogen stream and a carbon dioxide-rich stream at the second location; and sequestering at least a portion of the carbon dioxide-rich stream.
Aspect 15: A method according to Aspect 14, further comprising pyrolysing a second methane-rich stream to produce a third hydrogen stream and a second solid carbon intermediate at a third location; mixing the second solid carbon intermediate with water and a binding agent to produce a second converted solid carbon intermediate; and transporting at least a portion of the second converted solid carbon intermediate to the storage site.
Aspect 16: A system for producing hydrogen comprising a pyrolyzer configured to accept a methane-rich stream and produce a first hydrogen stream and a solid carbon intermediate at a first location; a transportation means configured to deliver the solid carbon intermediate from the first location to a second location; a gasifier configured to accept the solid carbon intermediate and an oxygen stream to produce a second hydrogen stream and a carbon dioxide-rich stream at the second location; and a carbon dioxide sequestration site configured to accept at least a portion of the carbon dioxide-rich stream.
Aspect 17: A system according to Aspect 16, wherein the first location is at least 100 miles away from the second location.
Aspect 18: A system according to Aspect 16 or Aspect 17, further comprising a storage site; wherein the solid carbon intermediate is transported to the storage site prior to being transported to the second location.
Aspect 19: A system according to Aspect 18, wherein the storage site is at a third location.
Aspect 20: A system according to Aspect 19, wherein the second location is at least 100 miles away from the third location.

### EXAMPLE

A process generating H₂ *via* the pyrolysis of methane was compared to a process combining pyrolysis of methane with gasification of the solid carbon intermediate as shown in Fig. 1 using the commerically available Aspen^{™} process modeling software. Both processes assumed pyrolyzer operating conditions of 2.5 bar gauge (barg) and 1200°C. Oxygen required in the gasification step was assumed to require 0.4 kWh/kg O₂ (kilowatt hours per kilogram of oxygen) specific power and the carbon intensity of the electricity was assumed to be 450 g CO₂/kWh (grams of carbon dioxide per kilowatt hour). CO₂ was assumed to be captured at a rate of 96% requiring a thermal duty of 1 MJ/kg CO₂ (megaJoules per kilogram of carbon dioxide).

| | Pyrolysis Only | Pyrolysis + Gasification |
|---|---|---|
| Normalized H₂ Production | 1 | 1.66 |
| Molar ratio H₂/CH₄ | 1.58 | 2.62 |
| Carbon Intensity (kg CO₂/kg H₂) | 1.61 | 1.95 |

As can be seen in the table above, the gasification of the solid carbon intermediate creates an additional two-thirds hydrogen compared to pyrolysis alone, raising the ratio of moles H₂ produced per mole CH₄ in the feed to the 2.4-2.8 range observed in typical commercial hydrogen production such as SMR. However, it can be seen that gasification of the solid carbon intermediate has a higher Cl than pyrolysis which leads to a higher overall Cl of the combined pyrolysis and gasification process. A person of ordinary skill in the art would be discouraged from integrating gasification with a low-Cl pyrolysis process for this reason. The increased CI of the combined pyrolysis and gasification process was found to be justified by the benefits that come from decoupling the location of the bulk of the hydrogen production by pyrolysis with the location of the carbon sequestration which expands the opportunities for low-Cl hydrogen projects.

While the principles of the invention have been described above in connection with preferred embodiments, it is to be clearly understood that this description is made only by way of example and not as a limitation of the scope of the invention.

## Claims

1. A method for producing hydrogen gas comprising:
pyrolysing a methane-rich stream to produce a first hydrogen stream and a solid carbon intermediate at a first location;
transporting the solid carbon intermediate, or a converted solid carbon intermediate derived therefrom, to at least a second location;
gasifying the solid carbon intermediate, or the converted solid carbon intermediate derived therefrom, with oxygen and, optionally steam and/or ash, to produce a second hydrogen stream and a carbon dioxide-rich stream at the at least second location; and
sequestering at least a portion of the carbon dioxide-rich stream.

2. A method according to Claim 1, wherein the solid carbon intermediate is transported from a plurality (N) of pyrolyzers to the at least second location.

3. A method according to Claim 1 or Claim 2, further comprising adding ash to the solid carbon intermediate prior to gasification with oxygen.

4. A method according to any of the preceding claims, wherein the solid carbon intermediate is transported to a storage site prior to gasification at the at least second location, wherein the storage site is optionally located at an at least third location.

5. A method according to Claim 4 wherein the storage site is located at an at least third location, said method further comprising transporting the solid carbon intermediate from the storage site at the at least third location to a plurality (M) of gasifiers.

6. A method according to any of the preceding claims, further comprising compressing the first hydrogen stream in a multistage compression system to produce a compressed hydrogen gas; and
feeding the compressed hydrogen gas to at least one downstream process;
wherein at least a portion of the energy to pyrolyze the methane-rich stream is generated from at least one renewable energy source.

7. A method according to Claim 6, further comprising feeding excess compressed hydrogen gas to storage;
withdrawing the excess compressed hydrogen gas from storage,
reducing the pressure of the excess compressed hydrogen gas, and
feeding the reduced pressure hydrogen gas to a first stage of the multistage compression system.

8. A method according to Claim 7, wherein the multistage compression system comprises a first section and at least one additional section downstream of the first section.

9. A method according to Claim 8, further comprising feeding the reduced pressure hydrogen gas to an intermediate stage of the multistage compression system.

10. A method according to Claim 9, further comprising feeding the reduced pressure hydrogen gas to the feed end of the multistage compression system.

11. A method according to Claim 7, further comprising feeding the reduced pressure hydrogen gas to a second stage of the multistage compression system;
wherein the second stage of the multistage compression system is upstream of the first stage of the multistage compression system.

12. A method according to any of the preceding claims comprising:
mixing the solid carbon intermediate with water and a binding agent to produce the converted solid carbon intermediate;
transporting at least a portion of the converted solid carbon intermediate from the first location to a storage site;
transporting the at least a portion of the converted solid carbon intermediate from the storage site to the second location; and
gasifying the converted solid carbon intermediate with oxygen, steam, and ash to produce the second hydrogen stream and the carbon dioxide-rich stream at the second location.

13. A method according to Claim 12, further comprising:
pyrolysing a second methane-rich stream to produce a third hydrogen stream and a second solid carbon intermediate at a third location;
mixing the second solid carbon intermediate with water and a binding agent to produce a second converted solid carbon intermediate; and
transporting at least a portion of the second converted solid carbon intermediate to the storage site.

14. A system for producing hydrogen comprising:
a pyrolyzer configured to accept a methane-rich stream and produce a first hydrogen stream and a solid carbon intermediate at a first location;
a transportation means configured to deliver the solid carbon intermediate, or a converted solid carbon intermediate, from the first location to a second location;
a gasifier configured to accept the solid carbon intermediate, or the converted solid carbon intermediate, and an oxygen stream and, optionally steam and/or ash, to produce a second hydrogen stream and a carbon dioxide-rich stream at the second location; and
a carbon dioxide sequestration site configured to accept at least a portion of the carbon dioxide-rich stream.

15. A system according to Claim 14, wherein the first location is at least 100 miles away from the second location.

16. A system according to Claim 14 or Claim 15, further comprising a storage site;
wherein the solid carbon intermediate is transported to the storage site prior to being transported to the second location, and wherein the storage site is optionally at a third location.

17. A system according to Claim 16, wherein the storage site is at a third location, and wherein the second location is at least 100 miles away from the third location.
